# FASCICULE DE BREVET EUROPEEN

(11) **EP 1 412 226 B1**
(45) Date de publication et mention de la délivrance du brevet: **10.01.2007**
(21) Numéro de dépôt: 02748955.8
(22) Date de dépôt: 14.06.2002
(51) Int. Cl.: B60R 13/08

(54) **PROCEDE D'ISOLATION ACOUSTIQUE D'UN CORPS CREUX, TEL QU'UNE PARTIE DE CAISSE DE VEHICULE AUTOMOBILE**
VERFAHREN ZUR AKUSTISCHEN ISOLIERUNG EINES HOHLKÖRPERS, Z.B. EIN TEIL EINER KRAFTFAHRZEUGKAROSSERIE
METHOD FOR ACOUSTIC INSULATION OF A HOLLOW BODY SUCH AS PART OF A MOTOR VEHICLE BODY SHELL

(30) Priorité: 15.06.2001 FR 0107888
(43) Date de publication de la demande: 28.04.2004
(73) Titulaire: Peugeot Citroen Automobiles, 92200 Neuilly Sur Seine (FR)
(72) Inventeur: NICOLIER, Stéphane, F-25600 Vieux Charmont (FR); SAILLET, Philippe, F-25700 Valentigney (FR)
(74) Mandataire: De Cuenca, Emmanuel Jaime
(86) Numéro de dépôt international: PCT/FR2002/002049
(87) Numéro de publication internationale: WO 2002/102624

(56) Documents cités:
- EP-A- 0 812 968
- FR-A- 2 749 263
- US-A- 5 373 027
- PATENT ABSTRACTS OF JAPAN vol. 016, no. 223 (M-1253), 25 mai 1992 (1992-05-25) & JP 04 043136 A (TOKAI RUBBER IND LTD), 13 février 1992 (1992-02-13)
- PATENT ABSTRACTS OF JAPAN vol. 1999, no. 02, 26 février 1999 (1999-02-26) & JP 10 299115 A (HEISEI SANGYO:KK;SUNLIGHT:KK), 10 novembre 1998 (1998-11-10)
- DATABASE WPI Section Ch, Week 200036 Derwent Publications Ltd., London, GB; Class A25, AN 2000-420524 XP002196038 & KR 99 043 783 A (HYUNDAI MOTOR CO LTD), 15 juin 1999 (1999-06-15)

## Description

La présente invention concerne un procédé d'isolation acoustique d'un corps creux.

Elle concerne plus particulièrement un procédé d'isolation acoustique d'une partie d'une caisse de véhicule automobile.

L'isolation acoustique est devenue une préoccupation importante dans la conception des véhicules automobile récents. Ainsi, de nombreuses améliorations ont été apportées sur la maîtrise du bruit émis par le groupe motopropulseur du véhicule et en paticulier par le moteur. D'autres améliorations ont été également apportées sur l'isolation acoustique du bruit transmis par le bloc avant, c'est-à-dire de la zone située entre la partie disposée sous le capot moteur et l'habitacle du véhicule. Ces améliorations ont fait réapparaître des bruits secondaires jusqu'alors masqués par les bruits précités. Ainsi, les bruits aérodynamiques ou provenant des roulements des roues et propagés dans l'habitacle du véhicule redeviennent gênants pour les occupants du véhicule.

Pour pallier à cet inconvénient, il a été prévu d'insérer différents matériaux insonorisants dans la structure de la caisse du véhicule. Ces matériaux sont généralement insérés dans le ou les corps creux de la caisse du véhicule automobile par l'opérateur lors de la fabrication du véhicule.

Cette isolation acoustique de ces corps creux est parfois difficile à effectuer lorsque la forme des matériaux insonorisants employés n'est pas adaptée au volume de ces corps creux et/ou l'accessibilité à ceux-ci est délicate pour l'opérateur. Ainsi, celui-ci ne peut utiliser des blocs de mousse ou de ouate utilisés habituellement pour isoler acoustiquement d'autres parties d'une caisse de véhicule automobile lorsque la section de passage permettant l'accès au corps creux à isoler est trop faible.

Pour résoudre ce problème, il a déjà été proposé différentes solutions pour les sections de faible et moyen passage.

Une première solution consiste à ensacher une mousse insonorisante classique prélablement découpée ou moulée puis de comprimer cette mousse ensachée en faisant le vide d'air à l'intérieur soit directement lors de la fabrication de la mousse, après découpe de celle-ci, soit en bord de ligne de montage du véhicule automobile. Cette solution n'est pas satisfaisante car d'une part elle nécessite l'utilisation de moyens coûteux pour faire le vide et d'autre part les sacs utilisés doivent être de très bonne qualité pour éviter qu'ils ne se déchirent et donc que la mousse ne s'expanse avant le montage dans la caisse du véhicule.

Une deuxième solution consiste à utiliser une bombe de mousse sous pression diffusée par la buse. Cette solution est d'une part très coûteuse par le volume de mousse nécessaire par véhicule pour rendre l'isolation acoustique satisfaisante et d'autre part utilise des gaz nocifs pour l'opérateur.

Une autre solution consiste à utiliser un insert gonflant sous la forme d'un support métallique ou plastique recouvert d'une matière qui se gonfle lors du passage de la caisse de véhicule automobile en étuve. Cette solution est coûteuse car d'une part le prix de l'insert est élevé et d'autre part elle nécessite le passage obligatoire de la caisse en étuve.

Une autre solution enfin, décrite dans le brevet EP 0 353 418, consiste à utiliser une mousse en polyuréthane à cellules ouvertes entourée d'une fine couche de cellules fermées garantissant l'étanchéité de la mousse et dont la mise en place dans le corps creux est assurée par aspiration de l'air contenu à l'intérieur par le biais d'une pompe, la mousse reprenant sa forme initiale lors du retrait de la pompe. Cette solution est également coûteuse car le coût de la mousse utilisée et celui de la pompe est très important. De plus, l'opérateur doit être vigilant pour ne pas risquer de percer la fine couche de cellules fermées lors de son introduction dans le corps creux constitué par la caisse du véhicule qui présente des bords coupants. Enfin, la position finale de la mousse dans le corps creux est très aléatoire, ce qui peut nuire à l'efficacité de l'isolation acoustique.

Le but de la présente invention est alors de remédier aux inconvénients précités et de proposer un procédé d'isolation acoustique d'un corps creux de section de passage faible ou moyenne, qui soit peu coûteux, simple à mettre en oeuvre et efficace.

Pour ce faire, l'invention a pour objet un procédé d'isolation acoustique d'un corps creux, tel qu'une partie de caisse de véhicule automobile, dans lequel on remplit ledit corps creux avec au moins une mousse à cellules ouvertes caractérisé en ce qu'on effectue le remplissage d'au moins une partie du corps par déversement de flocons de mousse() à l'intérieur de celui-ci.

Un des exemples en est le document FR-A-2 749 263 qui décrit un élément de structure renforcé dont l'élément intérieur rigide nervuré permet la diffusion de la chaleur nécessaire à l'expansion du produit moussant qu'il supporte, de façon à remplir le corps creux, partie d'une structure ou d'un chassis allégé.

Avantageusement, les flocons de mousse sont des morceaux déchiquetés dans un bloc de mousse.

Avantageusement encore et préalablement au déversement des flocons, on conditionne ceux-ci dans un récipient() dont le volume est sensiblement égal à celui de la partie du corps creux à remplir.

De préférence, le récipient est un sac souple().

L'invention concerne également une caisse de véhicule automobile dont au moins une partie est remplie selon le procédé décrit précédemment.

De préférence, la partie remplie est située autour d'un passage de roue arrière de la caisse.

D'autres avantages et caractéristiques de l'invention seront mieux compris à la lecture de la description détaillée faite en référence aux figures suivantes qui représentent respectivement:
- figure 1 : une représentation schématique partielle d'une partie arrière d'une caisse de véhicule automobile conforme à l'invention ;
- figure 2 : une vue agrandie de la partie arrière de la caisse remplie conformément au procédé selon l'invention;
- figure 3 : 1 une vue agrandie de flocons de mousse conformes à l'invention avec lesquels la partie arrière est remplie.

Par souci de clarté, on précise que les différentes pièces mentionnées ci-dessous sont assemblées entre elles de manière classique, par soudage ou vissage et que le mode de fixation entre deux pièces particulières ne sera pas décrit plus précisément.

Cette partie arrière d'une caisse de véhicule automobile 1 de type « break » comporte, de manière connue en soi, notamment un flan de panneau latéral 2 sur lequel sont rapportés respectivement une doublure de custode supérieure 3, une doublure de custode inférieure 4, un longeron latéral 5 et enfin un passage de roue 6.

Une doublure d'aile arrière non représntée et également rapportée sur le flan de panneau 2 en partie supérieure du passage de roue 6.

La doublure de custode supérieure 3 présente dans sa partie inférieure une encoche 31 sur laquelle est prévue d'être fixée un enrouleur de ceinture arrière non représenté dont le support est fixé à la partie supérieure 41 de la doublure de custode inférieure 4.

Cette doublure de custode inférieure 4 forme avec le flan de panneau latéral 2 un corps creux (C) d'ouverture ( O ) délimité également d'une part par le passage de roue arrière 6 et la doublure d'aile arrière et d'autre part par la jonction 51 avec le longeron latéral 5.

Pour pouvoir obtenir un niveau de confort acoustique dans l'habitacle à l'arrière du véhicule sensiblement équivalent à celui de l'avant isolé acoustiquement de l'extérieur, il est nécessaire d'empêcher les bruits aérodynamiques des roulements de la roue de se propager du passage de roue 5 dans l'habitacle du véhicule.

Pour atteindre cet objectif, l'opérateur vient placer et coincer tout d'abord dans la partie 21 du flan de panneau 2 dégagée et accesible facilement depuis l'intérieur de la caisse, un bloc de mousse de taille adéquate obtenu par moulage ou découpage dont les caractéristiques sont par ailleurs connues pour cette application.

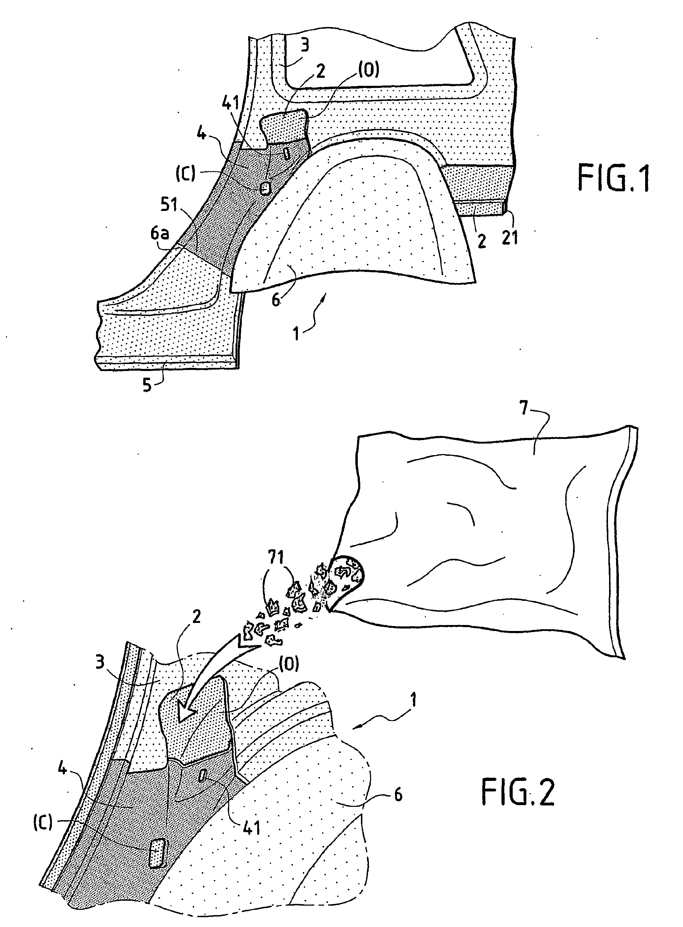

Puis, il vient mettre en regard de l'ouverture (O) un sac souple 7 rempli de flocons de mousse 71 d'un volume sensiblement égal au volume du corps creux (C), tel que montré à la figure 2, puis vient déverser ces mêmes flocons dans le corps creux.

Les flocons utilisés sont des chutes de mousse en matériau alvéolaire de type absorbant polyuréthane de polyester. Leur forme est aléatoire et leur taille comprise entre 8 et 8000mm³.

Des essais d'absorption acoustique ont été effectués autour du corps creux de manière à vérifier si l'isolation acoustique ainsi réalisée était suffisante pour empêcher les bruits générés dans le passage de roue arrière 6 de circuler dans le corps creux et ainsi de remonter dans l'habitacle du véhicule.

Il a été ainsi constaté qu'aussi bien les médiums que les hautes fréquences induites par les bruits étaient complètement absorbées par les flocons selon l'invention dans toutes les parties autour du passage de roue. L'isolation acoustique est ainsi assurée tout en ne nécessitant ni contrôle de positionnement, ni remise en place éventuelle d'un bloc de mousse moulé selon la forme complexe du corps creux (C).

L'invention qui vient d'être décrite permet très avantageusement d'isoler acoustiquement un corps creux dont l'accès est très difficile.

En particulier, dans le cas d'une partie de caisse de véhicule automobile, l'opérateur ne risque pas de se blesser en intoduisant sa main à travers l'ouverture dont les bords en tôle bruts de découpe sont coupants.

De plus, la mise en oeuvre du procédé est aisé et ne nécessite aucun aménagement particulier le long de la ligne d'assemblage du véhicule.

Enfin, le coût des flocons est extrêmement faible car ils sont issus de chutes.

Il va de soi que différentes variantes et améliorations peuvent être apportées sans pour autant sortir du cadre de l'invention.

Ainsi, le sac livré aux opérateurs pour mettre en oeuvre le procédé peuvent être améliorés pour faciliter sa préhension et son ouverture.

De même, au lieu d'être conditionnés dans un sac souple, les flocons selon l'invention peuvent tout aussi être déversés dans le corps creux par l'intermédiaire de moyens adaptés pour insuffler des morceaux de mousse.

## Revendications

1. Procédé d'isolation acoustique d'un corps creux (C), tel qu'une partie de caisse de véhicule automobile, dans lequel on remplit ledit corps creux avec au moins une mousse à cellules ouvertes **caractérisé en ce qu'**on effectue le remplissage d'au moins une partie du corps par déversement de flocons de mousse (71) à l'intérieur de celui-ci.

2. Procédé selon la revendication 1, **caractérisé en ce que** les flocons de mousse sont des morceaux déchiquetés dans un bloc de mousse.

3. Procédé selon la revendication 1 ou 2 **caractérisé en ce que**, préalablement au déversement des flocons, on conditionne ceux-ci dans un récipient(7) dont le volume est sensiblement égal à celui de la partie du corps creux à remplir.

4. Procédé selon la revendication 3, **caractérisé en ce que** le récipient est un sac souple(7).

5. Caisse (1) de véhicule automobile dont au moins une partie (4) est remplie selon le procédé d'une quelconque des revendications précédentes.

6. Caisse selon la revendication 6, **caractérisée en ce que** la partie remplie est située autour d'un passage de roue arrière de la caisse.

## Claims

1. Method for acoustic insulation of a hollow body (C), such as part of a motor vehicle body shell, in which said hollow body is filled with at least one open-cell foam, **characterised in that** the filling of at least one part of the body is achieved by pouring foam flakes (71) into said part.

2. Method according to Claim 1, **characterised in that** the foam flakes are pieces torn off from a block of foam.

3. Method according to Claim 1 or 2 **characterised in that**, before the flakes are poured, they are enclosed in a container (7), the volume of which is substantially equal to that of the part of the hollow body to be filled.

4. Method according to Claim 3, **characterised in that** the container is a flexible bag (7).

5. Body shell (1) of a motor vehicle of which at least one part (4) is filled according to the method of any one of the preceding claims.

6. Body shell according to Claim 5, **characterised in that** the part filled is located around a rear wheel arch of the body shell.

## Patentansprüche

1. Verfahren zur akustichen Isolierung eines hohlen Körpers (C), beispielsweise eines Abschnitts der Karosserie eines Kraftfahrzeugs, bei dem der hohle Körper mit mindestens einem offenporigen Schaumstoff gefüllt wird, **dadurch gekennzeichnet, dass** das Füllen von mindestens einem Abschnitt des Körpers **dadurch** erfolgt, dass Schaumstoff-Flocken (71) in sein Inneres geleert werden.

2. Verfahren nach Anspruch 1, **dadurch gekennzeichnet, dass** die Schaumstoff-Flocken aus einem Schaumstoffblock abgerissene Stückchen sind.

3. Verfahren nach Anspruch 1 oder 2, **dadurch gekennzeichnet, dass** die Flocken vor dem Einfüllen in einem Behälter (7) konditioniert werden, dessen Volumen im Wesentlichen dem Volumen des zu füllenden Abschnitts des hohlen Körpers entspricht.

4. Verfahren nach Anspruch 3, **dadurch gekennzeichnet, dass** der Behälter ein elastischer Sack (7) ist.

5. Kraftfahrzeug-Karosserie (1), bei der mindestens ein Abschnitt (4) mit dem Verfahren nach einem der vorhergehenden Ansprüche gefüllt ist.

6. Karosserie nach Anspruch 5, **dadurch gekennzeichnet, dass** der gefüllte Abschnitt um einen Hinterrad-kasten der Karosserie herum angeordnet ist.
